# EUROPEAN PATENT APPLICATION

(11) **EP 4 529 978 A1**
(43) Date of publication of application: **02.04.2025**
(21) Application number: 23199759.4
(22) Date of filing: 26.09.2023
(51) Int. Cl.: B01J 4/00, B01J 19/00, B01J 19/24, B01J 19/32, C08G 63/78, C08G 63/08, C08G 63/181, C08G 63/06

(54) **A REACTOR AND A METHOD FOR PERFORMING A POLYCONDENSATION OR DEPOLYMERIZATION REACTION**

(71) Applicant: Sulzer Management AG, 8401 Winterthur (CH)
(72) Inventor: YU, Yingchuan, 8046 Zürich (CH); STREHLER, Adrian, 8207 Schaffhausen (CH); BATTÙ, Alex, 9548 Matzingen (CH); AWATE, Samrat, Pune 411009 Maharashtra (IN)
(74) Representative: IPS Irsch AG

(57) **Abstract**

The present invention relates to a reactor, in particular for performing a polycondensation or depolymerization reaction, which comprises at least one inlet, at least one product outlet line, a liquid zone, an internal zone and a gas zone comprising at least one gas outlet line, wherein the internal zone is arranged above the liquid zone, wherein the gas zone is arranged above the internal zone, and, wherein the gas zone has a larger cross-sectional area than the internal zone.

## Description

The present invention relates to a reactor, in particular for performing a polycondensation or depolymerization reaction, and to a method for performing a polycondensation or depolymerization in the respective reactor.

Polycondensation reactions are widely used to synthesize valuable compounds, such as esters, oligoesters and polyesters. In turn, depolymerization reactions are used to degrade oligomers and/or polymers to smaller molecules, such as to degrade oligomers and/or polymers of lactic acid to lactide. Important esters are for instance triglycerides, such as fats and oils, monoglycerides, which are often used as emulsifiers, methyl esters of fatty acids, which are often used as synthetic fuels, polyethylene terephthalates, polylactid acid and polyethylene furanoates. Particular important polyesters are polylactic esters, which gain more and more importance, since they can be obtained from renewable resources and are mostly compostable and/or biodegradable. Moreover, the technological properties of these polymers come quite close to the properties of those polymers derived from fossil-based resources, which explains why these polymers are regarded as highly promising substitutes for the latter.

Generally, two alternative principal methods are known for synthesizing polylactic acid homo- or copolymers. The first principal method is the direct polycondensation of lactic acid optionally together with one or more comonomers, such as caprolactone and/or glycolide, to either the homopolymer or copolymer, respectively, such as the direct polycondensation of lactic acid to polylactic acid homopolymer. The second principal method known for synthesizing polylactic acid homo- or copolymers is the ring-opening-polymerization of lactide (which is the cyclic diester of lactic acid) optionally with one or more other cyclic esters, such as glycolide (which is the cyclic diester of glycolic acid), lactones or the like. The lactide is typically produced by condensation of two lactic acid molecules or by first oligomerizing lactic acid and then subjecting the oligomer to a depolymerization reaction. For instance, the lactide is prepared by fermentation of carbohydrates from biomass, such as starch, sugar or corn resulting in lactic acid, by then oligomerizing the lactic acid and by afterwards subjecting the oligomers to the depolymerization reaction.

During a polycondensation reaction, water is produced as side-product, which is dispersed at an equilibrium state in the viscous reaction mixture further comprising non-reacted monomer and the produced oligomers and polymers. In order to increase the conversion rate of the polycondensation reaction, the water must be removed instantaneously and efficiently from the viscous reaction mixture. However, due to the high viscosity of the reaction mixture, the fast and efficient removal of water from the reaction mixture is still a challenge and in need of improvement. Likewise thereto, the depolymerization of a polymer or oligomer, respectively, is an equilibrium reaction. In order to increase the conversion rate of the depolymerization, such as of the depolymerization of oligolactide or polylactide, respectively, the produced monomer, such as lactide, needs to be removed from the reaction mixture as soon as it is formed therein. However, the reactant, oligomers and polymers, such as lactic oligomers and lactic polymers, have a relevant high viscosity and the removal of monomer, such as lactide, from the viscous reaction mixture is challengeable.

In view of this, the object underlying the present invention is to provide a reactor and a method for performing a polycondensation or depolymerization reaction with a particular high yield by efficiently removing low molecular weight side-products, such as water, being produced during the reaction, from a viscous (reaction) mixture.

In accordance with the present invention, this objective is satisfied by providing a reactor, in particular for performing a polycondensation or depolymerization reaction, which comprises at least one inlet, at least one product outlet line, a liquid zone, an internal zone and a gas zone comprising at least one gas outlet line, wherein the internal zone is arranged above the liquid zone, wherein the gas zone is arranged above the internal zone, and, wherein the gas zone has a larger cross-sectional area than the internal zone.

This solution bases on the finding that the removal of low molecular weight compounds, such as water, from a highly viscous mixture, such as highly viscous reaction mixture, may be fast and particularly efficiently effected in a reactor, which comprises above the reaction zone, which is denoted here as liquid zone, an internal zone and above this a gas zone having a larger cross-sectional area than the internal zone. The internal zone allows to efficiently pre-separate liquid from a gas-liquid mixture ascending form the liquid zone comprising the highly viscous mixture into the internal zone due to a high mass and heat transfer in the internal zone, whereas the upper gas zone having a larger cross-sectional area than the internal zone allows to efficiently remove remaining liquid droplets being entrained in the gas ascending from the internal zone into the gas zone, since the flow of the gas mixture ascending from the internal zone into the gas zone is lowered in the gas zone due to its larger cross-sectional area, as a consequence of which liquid droplets being entrained in the gas may coalesce to larger droplets, which may then easily descend by gravitational force and thereby are removed from the gas. Thereby, the reactor and method in accordance with the present invention allow to perform a polycondensation or depolymerization reaction with a particular high yield by efficiently removing low molecular weight side-products, such as water, being produced during the reaction, from viscous (reaction) mixture.

In accordance with the present invention, the reactor comprises a liquid zone, an internal zone and a gas zone. In one embodiment, the reactor is one vessel, which comprises the aforementioned zones, wherein the single zones are arranged on top of each other. Alternatively, the reactor may comprise three different vessels, a first of which forming the liquid zone, a second of which forming the internal zone and a third of which forming the gas zone, wherein the vessels are arranged on top of each other, wherein the vessels are directly connected with each other or indirectly, i.e. with an intermediate element, such as a pipe, there between. In all these embodiments, however, each of the liquid zone, of the internal zone and of the gas zone comprise a peripheral wall surrounding the peripheral surface of the respective zone, wherein the liquid zone also comprises a bottom wall and the vapor zone also comprises a top wall. In addition, the gas zone comprises a bottom wall, which surrounds at least the lower portions of the gas zone, below which no internal zone is arranged due to the larger cross-sectional area of the gas zone compared to that of the internal zone. However, the bottom wall of the gas zone may even extend further also to portions, below which the internal zone is arranged. In any case, the bottom wall comprises an opening so as to allow liquid and gas to flow from the internal zone to the gas zone and vice versa. In addition, the liquid zone may comprise a top wall and preferably in fact comprises a top wall, in particular when the liquid zone has a larger cross-sectional area than the internal zone. In this variant, the top wall at least the upper portions of the liquid zone, above which no internal zone is arranged due to the larger cross-sectional area of the liquid zone compared to that of the internal zone. However, the top wall of the liquid zone may even extend further also to portions, above which the internal zone is arranged. In any case, the top wall comprises an opening so as to allow liquid and gas to flow from the internal zone to the liquid zone and vice versa.

In accordance with the present invention, the gas zone of the reactor has a larger cross-sectional area than the internal zone of the reactor. If the cross-sectional area of the gas zone and/or of the internal zone varies over the vertical height of the respective zone, cross-sectional area means the average cross-sectional area of the respective zone. For calculating the average cross-sectional area of a zone, the respective zone is subdivided into adjacent cross-sectional segments each having a height or extension in the vertical direction, respectively, of 1 mm, wherein the average cross-sectional area of the respective zone is the quotient of the sum of the cross-sectional areas of all cross-sectional segments divided by the number of all segments.

Preferably, the gas zone has a(n) (average) cross-sectional area being 1 to 400% and more preferably 200 to 300% larger than that of the internal zone.

As set out above, the zones of the reactor may be indirectly connected with each other for instance via a pipe. In this embodiment, the pipe connecting the liquid zone and the internal zone as well as the pipe connecting the internal zone and the gas zone have essentially the same (average) cross-sectional area than the (average) cross-sectional area of the internal zone. Essentially the same cross-sectional area means with this regard that the (average) cross-sectional area of the respective pipe is 80 to 120%, preferably 90 to 110%, more preferably 95 to 105% and most preferably 100% of the (average) cross-sectional area of the internal zone of the reactor.

In accordance with a particular preferred embodiment of the present invention, the gas zone is directly connected with the internal zone and the internal zone is directly connected with the liquid zone, wherein the aforementioned zones are arranged in the aforementioned order in vertical direction above of each other.

The present invention is not particularly limited concerning the cross-sectional form of the liquid zone, of the internal zone and of the gas zone. For instance, each of the liquid zone, of the internal zone and of the gas zone may have, independently from each other, a circular, oval, elliptic, rectangular, square or polygonal cross-sectional form. Preferably, each of the liquid zone, of the internal zone and of the gas zone have the same cross-sectional form. More preferably, each of the liquid zone, of the internal zone and of the gas zone has a circular cross-sectional form so that each of these zones is, seen three-dimensionally, a hollow cylinder. Most preferably, in the latter alternative, the gas zone has a larger diameter than the internal zone.

In a further development of the idea of the present invention it is suggested that the liquid zone has the same or a larger (average) cross-sectional area or, if the liquid zone and the internal zone each have a circular cross-sectional area, a larger diameter than the internal zone. Preferably, the liquid zone has a(n) (average) cross-sectional area being 1 to 400% and more preferably 200 to 300% larger than that of the internal zone.

Good results are in particular obtained, when each of the liquid zone, of the internal zone and of the gas zone has a circular cross-sectional form, wherein the diameter of the gas zone is larger than the diameter of the internal zone and the diameter of the liquid zone is the same or larger, preferably larger, than the diameter of the internal zone.

In order to achieve a particular efficient removal of liquid being entrained in the gas phase ascending from the liquid zone via the internal zone through the gas zone, it is preferred that the gas zone comprises a de-entrainment element, such as preferably a demister and/or a wash liquid distributor being connected with a wash liquid inlet being provided in the gas zone and a wash liquid outlet being provided in the gas zone.

Any kind of demister may be used in this embodiment, such as a vane pack demister, a mesh type demister or cyclone demister. Vane pack demisters comprises a plurality of adjacent complex-formed plates, which are usually made of metal or plastic, wherein between adjacent plates fluid paths, such as those having, seen in the vertical direction, a z-form pattern, are formed so that during the flow of a gas phase, in which liquid droplets are entrained, through the fluid paths liquid droplets contact the surfaces of the plates, coalesce and then descend as large droplets and are thereby removed from the gas, which ascends through the demister. In turn, a mesh type demister comprises a knitted mesh, through which the gas/liquid-mixture flows so that liquid droplets contact the wire surfaces, coalesce and then descend as large droplets and are thereby removed from the gas, which freely moves upwardly through the mesh. Furthermore, a cyclone demister typically comprises a hollow cylindrical tube, through which the gas/liquid-mixture tangentially flows. While liquid droplets being entrained in the gas/liquid-mixture are spun through the centrifugal force to the peripheral wall of the hollow cylindrical tube and are drained from there out of the bottom of the hollow cylindrical tube, the gas freely flows through and exits the hollow cylindrical tube on its opposite end.

In the embodiment, in which the gas zone comprises a wash liquid distributor being connected with a wash liquid inlet and with a wash liquid outlet, it is preferred that the wash liquid inlet and the wash liquid outlet are provided at different locations of the gas zone and more preferably at different locations of the peripheral wall and/or top wall of the gas zone. Good results are for instance obtained, when the wash liquid distributor is arranged in the upper part of the gas zone, such as, seen in the vertical direction from the bottom to the top of the gas zone, in an area between 60 and 95% of the height of the gas zone, whereas the wash liquid inlet is preferably arranged in the top wall of the gas zone and connected with the wash liquid distributor with a line, such as a tube, and the wash liquid outlet is preferably arranged in the peripheral wall of the gas zone at a position being lower than that of the wash liquid distributor, such as, seen in the vertical direction from the bottom to the top of the gas zone, in an area between 30 and 70% of the height of the gas zone, and is connected with the wash liquid distributor with a line, such as a tube. The wash liquid dissolves or disperses liquid droplets being entrained in the ascending gas so as to thereby demist the ascending gas.

In order to achieve a good pre-separation of liquid from gas in the internal zone, i.e. in order to increase the mass transfer, it is proposed in a further development of the idea of the present invention that the internal zone comprises one or more internals for increasing the surface to volume ratio within the internal zone. Preferably, the one or more internals have a specific surface area of 10 to 1,000 m³/m², more preferably of 50 to 500 m³/m², still more preferably of 75 to 300 m³/m² and most preferably of 100 to 200 m³/m². Good results are in particular obtained, when the one or more internals are selected from the group consisting of beds of structured packings, of beds of random packings and of mixing heat exchange elements.

In accordance with a particular preferred embodiment of the present invention, the internal zone of the reactor comprises one or more beds of a so-called cross-channel corrugated structured sheet packing, which is assembled from a plurality of corrugated sheets, which are arranged parallel and in touching contact with each other. Preferably, the corrugated metal sheets are fixed with each other by means of several rods penetrating the corrugated sheets perpendicular to the longitudinal section of the corrugated sheets, wherein the rods are fixed with the first and last corrugated sheet by means of a washer and a nut or by bending the rod. Each corrugated sheet preferably comprises a plurality of alternately oriented peaks and valleys, wherein adjacent corrugated sheets are oriented such that the corrugations of the adjacent corrugated sheets intersect in crisscross fashion with the corrugations of the corrugated sheets extending obliquely relative to the vertical or longitudinal direction, thus forming inclined channels which continuously cross one another. These channels positively influence the flows of the gas phase and of the liquid phase within the packing and facilitate the mass transfer between the phases. That is, the gas phase and the liquid phase are brought into contact in the channels of the structured packing element and the mass transfer as well as the heat transfer between the phases is thus facilitated. During the operation, liquid droplets being entrained in the ascending gas contact the surfaces of the structured packing, coalesce and then descend as large droplets and are thereby removed from the ascending gas. For instance, the internal zone of the reactor may comprise one to ten, more preferably one to five, still more preferably one to three and most preferably one or two beds of structured packings being arranged on top of each other, but spaced apart.

In accordance with an alternative preferred embodiment of the present invention, the internal zone of the reactor comprises one or more beds of random packings, wherein each bed of random packings comprises a plurality of packing elements, which are randomly oriented in the packing. For instance, the packing elements are complex formed rings, which provide a large and uniform open area in every ring orientation, thereby allowing a high surface exposure to liquor and gas while minimizing dry zones. During the operation, liquid droplets being entrained in the ascending gas contact the surfaces of the random packing, coalesce and then descend as large droplets and are thereby removed from the ascending gas. For instance, the internal zone of the reactor may comprise one to ten, more preferably one to five, still more preferably one to three and most preferably one or two beds of random packings being arranged on top of each other, but spaced apart.

In accordance with an alternative preferred embodiment of the present invention, the internal zone of the reactor comprises one or more mixing heat exchange elements. Goods results are in particular obtained, when the internal zone of the reactor comprises one or more tube bundle heat exchangers, which comprise a plurality of hollow tubes through which a heat transfer medium may flow, wherein the hollow tubes are bended so as to also function as deflection means for fluid being flowing outside of and across the hollow tubes so as to thereby achieve a mixing of the fluid. During the operation, liquid droplets being entrained in the ascending gas contact the surfaces of the hollow tubes, coalesce and then descend as large droplets and are thereby removed from the ascending gas. Such tube bundle heat exchangers are for example commercially distributed by Sulzer Chemtech Ltd. under the tradename SMR.

Moreover, the internal zone of the peripheral wall thereof, respectively, may be provided with at least one inlet, which may be connected with an inlet line for the starting composition. The outlet line, in turn, may be connected with the liquid zone or the peripheral wall or bottom wall of the liquid zone, respectively.

In a further development of the idea of the present invention, it is suggested that the reactor further comprises a recirculation line allowing to recirculate liquid between the liquid zone and the internal zone of the reactor. This allows an efficient and complete mixing of the composition flowing through the internal and liquid zones. Good results are in particular obtained, when the recirculation line is connected with an outlet being provided in the liquid zone and an inlet being provided in the internal zone and optionally also with an inlet being provided in the liquid zone being arranged above the outlet. More specifically, it is preferred that the recirculation line is connected with an outlet being provided in the bottom wall of the liquid zone, that the recirculation line is connected with an inlet being provided in the peripheral wall of the internal zone and that the recirculation line is optionally also connected with an inlet being provided in the peripheral wall of the liquid zone. For instance, the recirculation line is connected with an inlet being provided at a position of the peripheral wall of the internal zone being located, seen in the vertical direction from the bottom to the top of the internal zone, in an area between 70 and 100% of the height of the internal zone. Likewise thereto, the recirculation line may be connected with an inlet being provided at a position of the peripheral wall of the liquid zone being located, seen in the vertical direction from the bottom to the top of the liquid zone, in an area between 30 and 70% of the height of the liquid zone.

Preferably, in this embodiment the feed line for starting composition is combined with the recirculation line, before the combined feed/recirculation line leads into the inlet being provided in the internal zone and more specifically in the peripheral wall of the internal zone. In turn, the product outlet line preferably splits off from the recirculation line.

In order to even improve the mixing efficiency and/or to precisely adjust a desired operational temperature, it is proposed in a further development of the idea of the present invention that a mixing and/or heat exchange element is arranged in the recirculation line.

In accordance with another particularly preferred embodiment of the present invention, the reactor further comprises a mixing and/or heat exchange element, which is directly connected with the liquid zone and which is arranged below the liquid zone. This allows in a constructional easy manner to optimize the mixing efficiency and to adjust the optimal operational temperature. Also in this embodiment, it is preferred that the reactor further comprises a recirculation line, which is connected in this embodiment preferably with an outlet being provided in the mixing and/or heat exchange element, which is directly connected with the liquid zone, wherein the recirculation line is further connected with an inlet being provided in the internal zone and optionally also with an inlet being provided in the liquid zone. Also in this embodiment, the recirculation line is preferably connected with an inlet being provided at a position of the peripheral wall of the internal zone being located, seen in the vertical direction from the bottom to the top of the internal zone, in an area between 70 and 100% of the height of the internal zone. Likewise thereto, the recirculation line may be connected with an inlet being provided at a position of the peripheral wall of the liquid zone being located, seen in the vertical direction from the bottom to the top of the liquid zone, in an area between 30 and 70% of the height of the liquid zone. In addition, it is also preferred in this embodiment that the feed line for starting composition is combined with the recirculation line, before the combined feed/recirculation line leads into the inlet being provided in the internal zone and more specifically in the peripheral wall of the internal zone. In turn, the product outlet line preferably splits off from the recirculation line. However, in this embodiment the recirculation line preferably does not comprise any mixing and/or heat exchange element. It is also preferred in this embodiment that the feed line for starting composition is combined with the recirculation line, before the combined feed/recirculation line leads into the inlet provided in the liquid zone, whereas the product outlet line splits off from the recirculation line.

In each of the two aforementioned embodiments, i.e. in the embodiment according to which the recirculation line is directly connected with an outlet being provided in the liquid zone or bottom wall of the liquid zone, respectively, as well as in the embodiment according to which the recirculation line is directly connected with a mixing and/or heat exchange element being directly connected with and being arranged below the liquid zone, the mixing and/or heat exchange element may be any element allowing to mix a liquid flowing therethrough and/or allowing to heat and/or cool a liquid flowing therethrough. For instance the mixing and/or heat exchange element is a mixing element comprising at least one mixer being selected from the group consisting of static mixers, dynamic mixers and jet mixers. While static mixer means any mixer, which does not comprise any moving part and does in particular not comprise any rotating part, a dynamic mixer comprises one or more moving parts and in particular rotating parts, whereas a jet mixer comprises a pump and an element through which liquid is injected into the mixer with high kinet-ical energy so as to generate a flow pattern effecting a mixing.

In a further development of the idea of the present invention, it is preferred that the mixing element is also heat- and/or coolable. This allows to compensate the heat or to provide more heat duty and/or to homogenize the discharged composition.

Good results are in particular obtained, when the mixing and/or heat exchange element is a static mixer means. Static mixers usually produce a mixing effect by generating a turbulent flow due to static, i.e. non-moving elements, such as plates, bars, crossbars, baffles, helically formed deflection means, grids and the like. If these elements are hollow, heat transfer medium may be flowed through the elements so that the respective static mixer has heat exchanging capabilities. Suitable examples for static mixers, are x-type static mixers, spiral/helical-type static mixers, quattro-type static mixers, baffle plate-type static mixers, turbulator strips-type static mixers and any combination of two or more of the abovementioned mixer types. X-type static mixers comprise deflection means in the form of bars, crossbars, plates or the like having in a plan view and/or side view and/or cross-sectional view a x-like form. Such x-type static mixers are described for instance in WO 2010/066457 A1, EP 1 206 962 A1, EP 2 158 027 B1 and EP 0 655 275 B1 and are commercially available from Sulzer Chemtech Ltd, Winterthur, Switzerland under the tradenames SMX, SMXL and SMX plus as well as from Fluitec, Neften-bach, Switzerland under the tradename CSE-X. Spiral/helical-type static mixers have a helically formed deflection means and are described for instance in US 3,743,250 A, whereas quattro-type static mixers comprise deflection means forming chamber-like mixing sections and are described for instance in EP 2 548 634 B1 and in EP 0 815 929 B1. While baffle plate-type static mixers comprise usually longitudinal deflection means and are described for instance in EP 1 510 247 B1 and in US 4,093,188 A, turbulator strip-type static mixers comprise in a tube a plurality of elongated strips, each of which being formed by a series of alternating deflection panels successively joined together by for example substantially triangular bridging portions with the strips being held together and anchored substantially on the axis of the tube by alternate ones of the bridging portions and the other bridging sections being disposed adjacent the inner wall of the tube and are described for instance in US 4,296,779 A. Other suitable static mixers are distributed from Sulzer Chemtech AG under the tradenames CompaX, SMI, KVM, SMV and GVM and from Stamixco AG, Wollerau, Switzerland under the tradename GVM. In view of the above, it is preferred that at least one and more preferred that all of the at least one static mixer of the at least two distributors are selected from the group consisting of x-type static mixers, spiral/helical-type static mixers, quattro-type static mixers, baffle plate-type static mixers, turbulator strips-type static mixers and any combination of two or more of the above mentioned mixer types. Most preferably, the mixing and heat element is a tube bundle heat exchanger, which is commercially distributed by Sulzer Chemtech Ltd. under the tradename SMR.

In accordance with another aspect, the present invention relates to a method for performing a polycondensation or depolymerization reaction, which comprises the steps of feeding a starting composition through an inlet into, of discharging a product composition through a product outlet line from and of discharging gas through a gas outlet line from the aforementioned reactor.

The method of the present invention is not particularly restricted concerning the type of starting composition. Goods results are in particular obtained, when the starting composition comprises a monomer, an oligomer and/or a polymer based on lactic acid or a similar dicarboxylic acid or based on furandicarboxylic acid. Thus, preferably the starting composition comprises lactic acid, lactic acid oligomer (such as lactide), lactic acid polymer, a mixture of lactic acid and lactic acid oligomer, a mixture of lactic acid, lactic acid oligomer and lactic acid polymer, 3-hydroxypropionic acid, oligomer of 3-hydroxypropionic acid, polymer of 3-hydroxypropionic acid, a mixture of 3-hydroxypropionic acid and oligomer of 3-hydroxypropionic acid, a mixture of 3-hydroxypropionic acid, oligomer of 3-hydroxypropionic acid and polymer of 3-hydroxypropionic acid, a mixture of alkylene glycol and furandicarboxylic acid, oligomer of alkylene glycol and furandicarboxylic acid, polymer of alkylene glycol and furandicarboxylic acid, a mixture of alkylene glycol, furandicarboxylic acid and oligomer of alkylene glycol and furandicarboxylic acid or, a mixture of alkylene glycol, furandicarboxylic acid, oligomer of alkylene glycol and furandicarboxylic acid and polymer of alkylene glycol and furandicarboxylic acid. Oligomer means in this connection a molecule comprising 2 to 10 repeating units of a monomer, whereas a polymer is a molecule comprising more than 10 repeating units of a monomer. Preferably, the furandicarboxylic acid is 2,4- furandicarboxylic acid and more preferably 2,5- furandicarboxylic acid, whereas the alkylene glycol is preferably ethylene glycol.

In a further development of the idea of the present invention, it is suggested that the residence time in the liquid zone is 1 to 20 hours and more preferably 2 to 10 hours. The residence time of the liquid in the liquid zone may be for instance adjusted by appropriately adjusting the liquid level in the liquid zone and by appropriately selecting the cross-sectional area or diameter of the liquid zone, respectively.

Good results are in particular obtained, when the gas zone comprises a demister and/or a wash liquid distributor being connected with a wash liquid inlet being provided in the gas zone and a wash liquid outlet being provided in the gas zone, wherein the wash liquid is the starting composition or, if the starting composition is a mixture of two or more components, of one, two or all components of the starting mixture. In case of performing a polycondensation reaction with lactic acid, optionally further containing lactic acid oligomer and/or lactic acid polymer, the wash liquid is preferably lactic acid. In case of performing a polycondensation reaction with 3-hydroxypropionic acid, optionally further containing 3-hydroxypropionic acid oligomer and/or lactic acid polymer, the wash liquid is preferably 3-hydroxypropionic acid. In turn, in case of performing a polycondensation reaction with alkylene glycol and furandicarboxylic acid, optionally further containing alkylene glycol/furandicarboxylic acid oligomer and/or alkylene glycol/furandicarboxylic acid polymer, the wash liquid is preferably mixture of alkylene glycol and furandicarboxylic acid, such as a mixture of ethylene glycol and 2,5-furandicarboxylic acid.

In accordance with another embodiment of the present invention, the gas zone comprises a demister, such as a vane pack demister, a mesh type demister or cyclone demister.

In accordance with a particular preferred embodiment of the present invention, the reactor, in which the method is performed, further comprises a recirculation line, wherein the recirculation line is connected with an outlet being provided in the liquid zone or with an outlet being provided in the mixing and/or heat exchange element, wherein the recirculation line is further connected with an inlet being provided in the internal zone and optionally also with an inlet being provided in the liquid zone. Preferably, the weight ratio of the recirculated stream divided by the feed stream is 1:1 to 200:1. Good results are in particular obtained, when the weight ratio of the recirculated stream divided by the feed stream is 20:1 to 150:1, more preferably 30:1 to 100:1, still more preferably 40:1 to 80:1 and most preferably about 50:1 to 70:1.

In addition, it is preferred that during the method in accordance with the present invention a catalyst is contained in the reactor, wherein the catalyst preferably comprises a rare earth metal, such as yttrium, or a transition metal, such as zirconium, titanium, or an alkaline earth metal, such as magnesium or calcium, or another metal, such as aluminum, tin or the like for the condensation reaction and/or for the depolymerization reaction.

Subsequently, the present patent application is described by way of example with reference to advantageous embodiments and to the enclosed drawings.

There is shown:

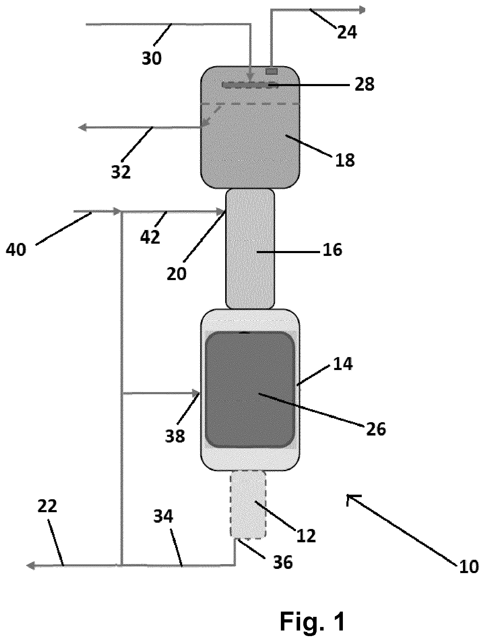

- Fig. 1: shows a schematic view of a reactor according to one embodiment of the present invention.

The reactor 10 shown in figure 1 comprises, seen from bottom to top, a mixing and heat exchange element 12, a liquid zone 14, an internal zone 16 and a gas zone 18. In addition, the reactor 10 and more specifically the internal zone 16 of the reactor comprises an inlet 20, whereas the reactor 10 further comprises a product outlet line 22 and a gas outlet line 24 being arranged on top of the gas zone 18. Each of the liquid zone 14, of the internal zone 16 and of the gas zone 18 are hollow cylindrical vessel having a circular cross-sectional area, wherein the diameters of the liquid zone 14 and of the gas zone 18 are the same, whereas the diameters of the liquid zone 14 and of the gas zone 18 are larger than the diameter of the internal zone 16. While the internal zone 16 comprises one bed of a structured packing 26, the gas zone 18 comprises a wash liquid distributor 28, which is connected with a wash liquid inlet 30 and with a wash liquid outlet 32.

Furthermore, the reactor 10 comprises a recirculation line 34, which is connected with an outlet 36 being provided at the bottom of the mixing and heat exchange element 12, wherein the recirculation line 34 is further connected with an inlet 38 being provided in the liquid zone 16. Moreover, the reactor 10 comprises a feed line 40 for starting composition, which is combined with the recirculation line 34, before the combined feed/recirculation line 42 leads into the inlet 20 of the internal zone 16. In turn, the product outlet line 22 splits off from the recirculation line 34.

During the operation, a starting composition, such as a lactic acid composition, is fed together with liquid being recirculated via lines 40, 42 through the inlet 20 into the internal zone 16 of the reactor, in which the mixture contacts the ascending gas in the bed of structured packing 26. In the internal zone 16, a pre-separation of liquid droplets being entrained in the ascending gas from the ascending gas is achieved, since liquid droplets being entrained in the ascending gas contact the surfaces of the structured packing 26, coalesce and then descend as large droplets and are thereby removed from the ascending gas. While the gas with remaining liquid droplets entrained therein further ascends into the gas zone 18, the liquid comprising the starting composition descends into the liquid zone 14, in which the lactic acid reacts in a polycondensation reaction under formation of water to lactic acid oligomer and polylactic acid. The liquid product descends from the liquid zone 14 to the mixing and heat exchange element 12 and is withdrawn from there via outlet 36 into the recirculation line 34. While a portion of the product composition is withdrawn via the product outlet line 22, the remaining portion is recirculated via inlet 38 into the liquid zone 14 and, after having been mixed with the starting mixture being fed via the feed line 40, through the combined feed/recirculation line 42 and through the inlet 20 into the internal zone 16 of the reactor 10. The ascending gas is further purified in the gas zone 18 from the entrained liquid, wherein a part of this liquid-gas separation is effected in the gas zone 18 by sedimentation of the liquid droplets due to gravitational force on account of the comparable low gas flow in the gas zone 18 being enlarged compared to the internal zone 16 and partially on account of the dissolution/dispersion of liquid droplets in the wash liquid flowing through the wash inlet line 30 through the wash liquid distributor 28 into the gas zone 18, from which it is withdrawn via the wash liquid outlet line 32. The so purified gas leaves the reactor 10 via the gas outlet line 24.

### Reference Numeral List

- 10: Reactor
- 12: Mixing and heat exchange element
- 14: Liquid zone of the reactor
- 16: Internal zone of the reactor
- 18: Gas zone of the reactor
- 20: Inlet of the reactor
- 22: Product outlet line
- 24: Gas outlet line
- 26: Bed of structured packing
- 28: Wash liquid distributor
- 30: Wash liquid inlet
- 32: Wash liquid outlet
- 34: Recirculation line
- 36: Outlet of the mixing and heat exchange element
- 38: Inlet of the liquid zone
- 40: Feed line
- 42: Combined feed/recirculation line

## Claims

1. A reactor, in particular for performing a polycondensation or depolymerization reaction, which comprises at least one inlet, at least one product outlet line, a liquid zone, an internal zone and a gas zone comprising at least one gas outlet line, wherein the internal zone is arranged above the liquid zone, wherein the gas zone is arranged above the internal zone, and, wherein the gas zone has a larger cross-sectional area than the internal zone.

2. The reactor in accordance with claim 1, wherein the gas zone is directly connected with the internal zone and the internal zone is directly connected with the liquid zone.

3. The reactor in accordance with claim 1 or 2, wherein each of the liquid zone, of the internal zone and of the gas zone has a circular cross-sectional form.

4. The reactor in accordance with any of the preceding claims, wherein the gas zone comprises a de-entrainment element being connected with a wash liquid inlet being provided in the gas zone and a wash liquid outlet being provided in the gas zone.

5. The reactor in accordance with any of the preceding claims, wherein the internal zone comprises one or more internals for increasing the surface to volume ratio within the internal zone, wherein the one or more internals have a specific surface area of 10 to 1,000 m³/m², preferably of 50 to 500 m³/m², more preferably of 75 to 300 m³/m² and most preferably of 100 to 200 m³/m².

6. The reactor in accordance with any of the preceding claims, wherein the reactor further comprises a recirculation line being connected with an outlet being provided in the liquid zone and an inlet being provided in the internal zone and optionally also with an inlet being provided in the liquid zone being arranged above the outlet, wherein preferably a mixing and/or heat exchange element is arranged in the recirculation line.

7. The reactor in accordance with any of claims 1 to 5, wherein the reactor further comprises a mixing and/or heat exchange element, which is directly connected with and arranged below the liquid zone, wherein the reactor preferably further comprises a recirculation line being connected with an outlet being provided in the mixing and/or heat exchange element and an inlet being provided in the internal zone and optionally also with an inlet being provided in the liquid zone.

8. The reactor in accordance with claim 6 or 7, wherein the mixing and/or heat exchange element is a mixing element comprising at least one mixer being selected from the group consisting of static mixers, dynamic mixers and jet mixers, wherein the mixing element is preferably also heat- and/or coolable.

9. A method for performing a polycondensation or depolymerization reaction comprising the steps of feeding a starting composition through an inlet into, of discharging a product composition through a product outlet line from and of discharging gas through a gas outlet line from the reactor of any of the preceding claims.

10. The method in accordance with claim 9, wherein the starting composition comprises lactic acid, lactic acid oligomer, lactic acid polymer, a mixture of lactic acid and lactic acid oligomer, a mixture of lactic acid, lactic acid oligomer and lactic acid polymer, 3-hydroxypropionic acid, oligomer of 3-hydroxypropionic acid, polymer of 3-hydroxypropionic acid, a mixture of 3-hydroxypropionic acid and oligomer of 3-hydroxypropionic acid, a mixture of 3-hydroxypropionic acid, oligomer of 3-hydroxypropionic acid and polymer of 3-hydroxypropionic acid, a mixture of alkylene glycol and furandicarboxylic acid, oligomer of alkylene glycol and furandicarboxylic acid, polymer of alkylene glycol and furandicarboxylic acid, a mixture of alkylene glycol, furandicarboxylic acid and oligomer of alkylene glycol and furandicarboxylic acid or, a mixture of alkylene glycol, furandicarboxylic acid, oligomer of alkylene glycol and furandicarboxylic acid and polymer of alkylene glycol and furandicarboxylic acid.

11. The method in accordance with claim 9 or 10, wherein the residence time in the liquid zone is 1 to 20 hours and preferably 2 to 10 hours.

12. The method in accordance with any of claims 9 to 11, wherein the gas zone comprises a demister and/or a wash liquid distributor being connected with a wash liquid inlet being provided in the gas zone and a wash liquid outlet being provided in the gas zone, wherein the wash liquid is the starting composition or, if the starting composition is a mixture of two or more components, of one, two or all components of the starting mixture.

13. The method in accordance with claim 12, wherein the wash liquid is lactic acid, 3-hydroxypropionic acid or a mixture of ethylene glycol and 2,5-furandicarboxylic acid.

14. The method in accordance with any of claims 9 to 13, wherein the reactor further comprises a recirculation line, wherein the recirculation line is connected with an outlet being provided in the liquid zone or with an outlet being provided in the mixing and/or heat exchange element, wherein the recirculation line is further connected with an inlet being provided in the internal zone and optionally also with an inlet being provided in the liquid zone.

15. The method in accordance with any of claims 9 to 14, wherein a catalyst is contained in the reactor, wherein the catalyst preferably comprises a rare earth metal, such as yttrium, or a transition metal, such as zirconium, titanium, or an alkaline earth metal, such as magnesium or calcium, or another metal, such as aluminum, tin or the like for the condensation reaction and/or for the depolymerization reaction.
